(19) Europäisches Patentamt
European Patent Office
Office européen des brevets

(11) **EP 4 443 149 A1**

(12) **EUROPEAN PATENT APPLICATION**
published in accordance with Art. 153(4) EPC

(43) Date of publication:
**09.10.2024 Bulletin 2024/41**

(21) Application number: **22901226.5**

(22) Date of filing: **28.11.2022**

(51) International Patent Classification (IPC):
**G01N 27/22** [(2006.01)]

(52) Cooperative Patent Classification (CPC):
**G01N 27/22**

(86) International application number:
**PCT/JP2022/043734**

(87) International publication number:
**WO 2023/100793 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 JP 2021194726**

(71) Applicant: **KYOCERA CORPORATION
Kyoto-shi, Kyoto 612-8501 (JP)**

(72) Inventor: **NAKAMURA, Katsumi
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **BUBBLE FRACTION METER**

(57) A bubble fraction meter for measuring a bubble fraction of a fluid to be measured, including: an insulator comprising a flow path through which the fluid to be measured flows; a pair of main electrodes disposed at positions facing each other across the flow path in the insulator and configured to measure an electrostatic capacitance of the fluid to be measured in the flow path; a processor including a temperature sensor configured to measure a fluid temperature of the fluid to be measured in the flow path, a pressure sensor configured to measure a pressure of the fluid to be measured in the flow path, and an atmospheric pressure sensor configured to measure an atmospheric pressure, the processor including a fluid relative dielectric constant correction calculation circuit configured to calculate a corrected relative dielectric constant of the fluid to be measured based on the fluid temperature and an absolute fluid pressure which is a value obtained by adding a pressure of the fluid to be measured to the atmospheric pressure.

FIG. 2B

**Description**

TECHNICAL FIELD

The present disclosure relates to a bubble fraction meter for measuring a bubble fraction of a cryogenic liquid such as liquid hydrogen.

BACKGROUND OF INVENTION

With the recent trend of reducing greenhouse gas emissions, the use of hydrogen as a potent energy storage medium has been attracting attention. In particular, since a volume of liquid hydrogen can be drastically reduced as compared with gaseous hydrogen, it is easy to store a large amount of liquid hydrogen for a long period of time, and hence various techniques for utilizing liquid hydrogen have been developed. However, a method for accurately measuring the flow rate which is required in handling a large volume of liquid hydrogen for industrial use has not been established. This is mainly because liquid hydrogen is a fluid which is very easily vaporized and has a large fluctuation of gas-to-liquid ratio that fluctuates largely.

That is, liquid hydrogen is a liquid having an extremely low temperature (boiling point -253°C) and having very high thermal conductivity and low latent heat, which causes immediate generation of voids. Therefore, in a transfer pipe, liquid hydrogen is in a so-called two-phase flow in which gas and liquid are mixed.

Because of the large fluctuation of the void content percentage, the flow rate of the liquid hydrogen cannot be accurately determined by only measuring the flow velocity in the pipe, as in ordinary liquids.

In view of the above, a bubble fraction meter that measures a bubble fraction indicating a gas phase volume percentage of the gas-liquid two phase flow is under development. As such a bubble fraction meter, Non-Patent Document 1 has proposed an electrostatic capacitance type void fraction sensor that measures an electrostatic capacitance using a pair of electrodes. Non-Patent Document 1 has reported measuring the void fraction (i.e., bubble fraction) of liquid nitrogen using this void fraction sensor.

CITATION LIST

NON-PATENT LITERATURE

Non-Patent Document 1: Norihide MAENO et al. (5), "Void Fraction Measurement of Cryogenic Two Phase Flow Using a Capacitance Sensor", Trans. JSASS Aerospace Tech. Japan, Vol. 12, No. ists 29, pp. Pa_101-Pa_107, 2014

SUMMARY

A bubble fraction meter according to the present disclosure is for measure of a bubble fraction of a fluid to be measured and includes: an insulator including a flow path through which the fluid to be measured flows; a pair of main electrodes disposed at positions facing each other across the flow path in the insulator and configured to measure an electrostatic capacitance of the fluid to be measured in the flow path; a processor including a temperature sensor configured to measure a temperature of the fluid to be measured in the flow path, a pressure sensor configured to measure a pressure of the fluid to be measured in the flow path, and an atmospheric pressure sensor configured to measure an atmospheric pressure, the processor including a fluid relative dielectric constant correction calculation circuit configured to calculate a corrected relative dielectric constant of the fluid to be measured based on a temperature and an absolute fluid pressure which is a sum of the pressure and the atmospheric pressure.

BRIEF DESCRIPTION OF THE DRAWINGS

FIG. 1 is a schematic cross-sectional view illustrating a basic configuration of a bubble fraction meter according to an embodiment of the present disclosure.
FIG. 2A is a perspective view illustrating a bubble fraction meter according to an embodiment of the present disclosure.
FIG. 2B is a cutaway perspective view of the bubble fraction meter illustrated in FIG. 2A.
FIG. 3 is a block diagram illustrating an example of a configuration of a processor in the present disclosure.
FIG. 4A is a perspective view illustrating a bubble fraction meter according to another embodiment of the present disclosure.
FIG. 4B is a cutaway perspective view of the bubble fraction meter illustrated in FIG. 4A.

FIG. 5 is a perspective view illustrating a bubble fraction meter according to still another embodiment of the present disclosure.

FIG. 6A is a diagram illustrating an example of a relative dielectric constant in the function of a fluid relative dielectric constant correction calculation circuit.

FIG. 6B is a diagram illustrating calibration data serving as a reference for measurement in the function of the fluid relative dielectric constant correction calculation circuit.

FIG. 6C is a diagram illustrating a variance covariance matrix obtained based on the function of the fluid relative dielectric constant correction calculation circuit.

FIG. 6D is a diagram illustrating an inverse matrix obtained based on the function of the fluid relative dielectric constant correction calculation circuit.

FIG. 7A is a diagram illustrating configuration data serving as a reference for calculation in the function of the electrostatic capacitance scale correction circuit.

FIG. 7B is a graph illustrating a relationship between an insulator electrostatic capacitance value and electrostatic capacitance measurement value obtained by the function of the electrostatic capacitance scale correction circuit.

FIG. 8 is a graph illustrating a relationship between the electrostatic capacitance and the bubble fraction of a cryogenic liquid.

DESCRIPTION OF EMBODIMENTS

Hereinafter, a bubble fraction meter according to an embodiment of the present disclosure will be described with reference to the drawings. In the following description, the fluid to be measured includes, but is not limited to, cryogenic liquids such as liquid hydrogen and liquid nitrogen.

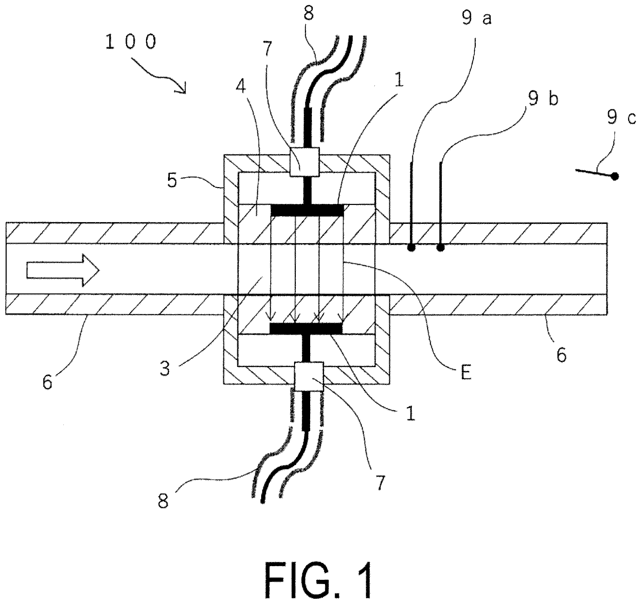

FIG. 1 illustrates a basic configuration of a bubble fraction meter 100 according to an embodiment of the present disclosure. In the bubble fraction meter 100, a flow path 3 through which a fluid to be measured flows is formed in an insulator 4. The insulator 4 is provided with a pair of main electrodes 1, 1 opposed to each other with the flow path 3 interposed therebetween, and these main electrodes 1, 1 measure the electrostatic capacitance of the fluid to be measured flowing through the flow path 3.

The insulator 4 is housed in a metal housing 5, and pipes 6 through which the fluid to be measured flows are connected to both ends of the flow path 3. A coaxial cable 8 is connected to the main electrodes 1, 1 via a connector 7. A temperature sensor 9a and a pressure sensor 9b are attached to a portion of the pipe 6 near the flow path 3.

The temperature sensor 9a is a sensor for measuring a fluid temperature T1. The fluid temperature T1 is a temperature of the fluid to be measured flowing through the pipe 6 at a portion close to the flow path 3, and is likely to fluctuate until the fluid to be measured flows and the temperature of the pipe 6 becomes constant. The pressure sensor 9b is a sensor for measuring a fluid gauge pressure Pg.

Further, an atmospheric pressure sensor 9c for measuring the atmospheric pressure is installed near the pipe 6.

The insulator 4 contain an insulating ceramic and has a cylindrical shape. Examples of such ceramics include zirconia, alumina, sapphire, aluminum nitride, silicon nitride, sialon, cordierite, mullite, yttria, silicon carbide, cermet, and $\beta$ eucryptite.

In addition, the inner diameter of the flow path 3 formed in the insulator 4 is preferably 9 mm or more and 381 mm or less.

The main electrode 1 can contain, for example, a copper foil or an aluminum foil. The main electrode 1 can be formed by, for example, a vacuum deposition method, a metallization method, an active metal method, or the like, and may be bonded to the bottom surface of a recessed portion formed on the outer peripheral surface of the insulator 4.

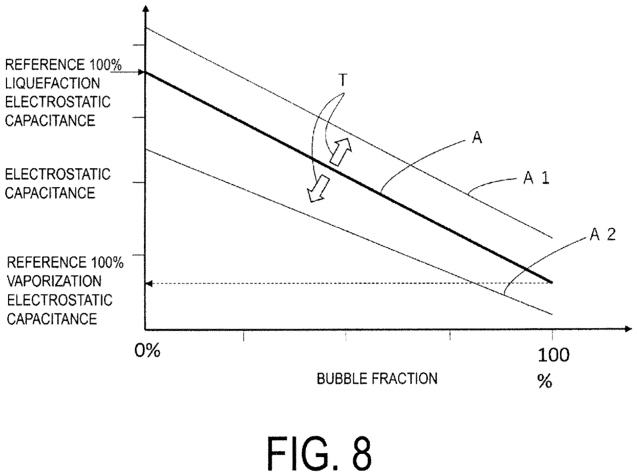

In general, the bubble fraction meter is electrically affected by an external environment and is likely to cause errors because it handles a physical property value called electrostatic capacitance. In particular, it is difficult to accurately measure the bubble fraction of the fluid to be measured over a wide temperature range from room temperature to the temperature of the liquified gas. For example, as illustrated in the relationship between the electrostatic capacitance value and the bubble fraction in FIG. 8, when the absolute pressure and the temperature fluctuate (indicated by the arrow T), the straight line A indicating the relationship between the electrostatic capacitance value and the bubble fraction fluctuates toward the straight line A1 or A2. That is, even when the bubble fraction is to be obtained from the electrostatic capacitance value measured by the bubble fraction meter, the bubble fraction can take a value in a range between the straight line A1 and the straight line A2, and cannot be uniquely determined.

When the electrostatic capacitance is measured, electric flux lines (indicated by arrows E) from one main electrode 1 to the other main electrode 1 pass through the insulator 4 and the flow path 3. Therefore, when the main electrodes 1, 1 measure the electrostatic capacitance of the fluid to be measured, the influence of the insulator 4 cannot be ignored. That is, since the relative dielectric constant of the insulator 4 has temperature dependency in most materials, the electrostatic capacitance value fluctuates due to a temperature change, and therefore, as described later, it is necessary to correct an electrostatic capacitance value C1 measured by the main electrodes 1, 1. To be specific, the electrostatic capacitance measurement value C1 is a measurement value obtained by observing a combination of the electrostatic capacitance of the fluid to be measured and the electrostatic capacitance of the insulator 14.

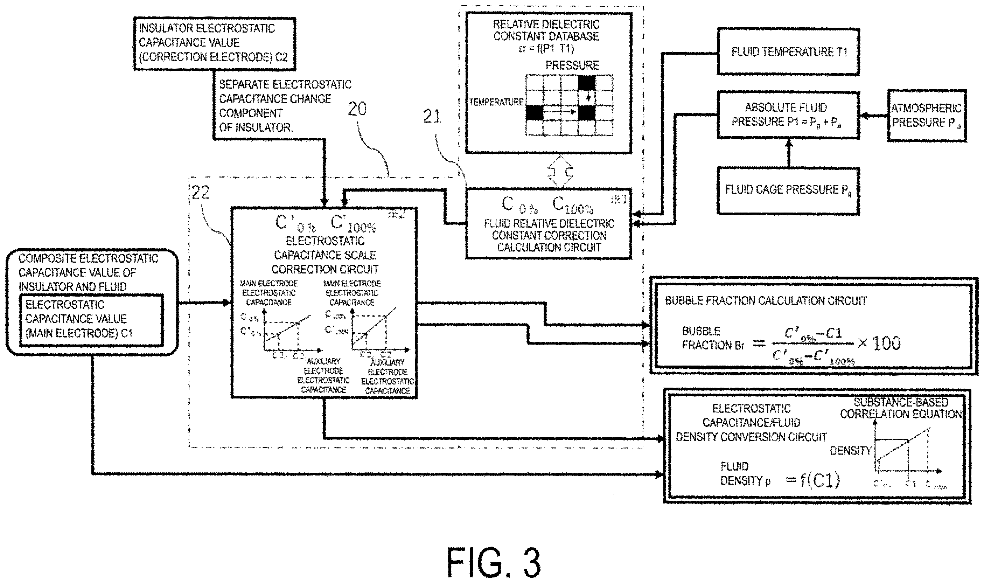

As illustrated in FIG. 3, in the processor 20, the fluid temperature T1 measured by the temperature sensor 9a and the absolute fluid pressure P1 obtained by adding the pressure (fluid gauge pressure Pg) measured by the pressure sensor 9b to the atmospheric pressure Pa measured by the atmospheric pressure sensor 9c are collated with the known relative dielectric constant database $\varepsilon f$ (P1, T1) by a fluid relative dielectric constant correction calculation circuit 21, to obtain the relative dielectric constant $\varepsilon_{0\%}$ of the fluid to be measured when the bubble fraction Br is 0% and the relative dielectric constant $\varepsilon_{100\%}$ of the fluid to be measured when the bubble fraction Br is 100%.

The electrostatic capacitance measurement value $C_{0\%}$ of the fluid to be measured when the bubble fraction Br is 0% can be calculated based on the following equation (1).

$C_{0\%} = \varepsilon_{0\%} \times (d/S)$ (d: distance between the main electrodes 1, 1; S: area of the main electrode 1)

The electrostatic capacitance measurement value $C_{100\%}$ of the fluid to be measured when the bubble fraction Br is 100% is also obtained using the above relational equation.

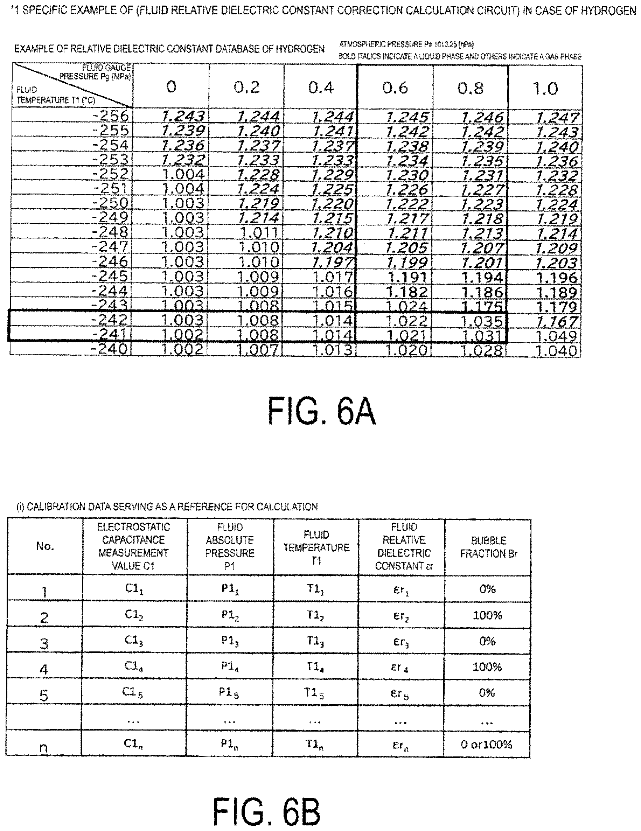

Here, even if the bubble fraction Br is 0%, when at least one of the fluid temperature T1 and the absolute fluid pressure P1 fluctuates, the relative dielectric constant $\varepsilon_{0\%}$ of the fluid to be measured exhibits different values ($\varepsilon_1$, $\varepsilon_3$,...) in accordance with the fluctuation as illustrated in "calibration data serving as a reference for calculation" in FIG. 6B. The same applies to the case where the bubble fraction Br is 100%, and the relative dielectric constant $\varepsilon_{100\%}$ of the fluid to be measured exhibits different values ($\varepsilon_2$, $\varepsilon_4$,...) in accordance with the fluctuation in the fluid temperature T1 and the absolute fluid pressure P1.

The electrostatic capacitance measurement value $C1_{ave}$, the absolute fluid pressure $P1_{ave}$, the fluid temperature $T1_{ave}$, the fluid relative dielectric constant $er_{ave}$, and the bubble fraction $Br_{ave}$, which are mean values of the electrostatic capacitance measurement value C1, the absolute fluid pressure P1, the fluid temperature T1, the fluid relative dielectric constant $\varepsilon_r$, and the bubble fraction Br, are obtained, and then multiple regression analysis is performed to obtain the electrostatic capacitance measurement value $C_{0\%}$ when the bubble fraction Br of the fluid to be measured is 0% and the electrostatic capacitance measurement value $C_{100\%}$ when the bubble fraction Br of the fluid to be measured is 100% by the following equations (2) and (3).

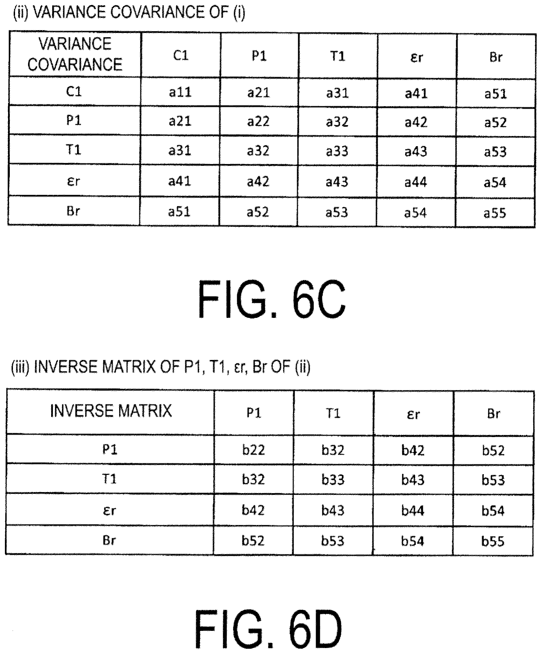

The procedure of the multiple regression analysis until the electrostatic capacitance measurement value $C_{0\%}$ and the electrostatic capacitance measurement value $C_{100\%}$ are obtained is to sequentially calculate a variance covariance matrix illustrated in FIG. 6C, an inverse matrix illustrated in FIG. 6D, and a constant term illustrated in the following equation (4) using, for example, Excel (trade name, Microsoft Corporation).

$$C_{0\%} = D + d1 \times P1 + d2 \times T1 + d3 \times \varepsilon r + d4 \times 0 \qquad (2)$$

$$C_{100\%} = D + d1 \times P1 + d2 \times T1 + d3 \times \varepsilon r + d4 \times 100 \qquad (3)$$

In the equations, D is a constant term obtained by multiple regression analysis, and is a value obtained by the following equation (4). d1, d2, d3, and d4 are partial regression coefficients.

$$D = C1_{ave} - d1 \times P1_{ave} - d2 \times T1_{ave} - d3 \times \varepsilon r_{ave} - d4 \times Br_{ave} \qquad (4)$$

It should be noted that the relative dielectric constant database $\varepsilon f$ (P1, T1) is based on self-made software. For example, as illustrated in FIG. 6A, how the relative dielectric constant of the fluid to be measured in a uniformly balanced state changes according to a change in the fluid gauge pressure Pg and a change in the fluid temperature T1 is stored in a database.

Using the electrostatic capacitance measurement value C1, the electrostatic capacitance measurement value $C_{0\%}$, and the electrostatic capacitance measurement value $C_{100\%}$ obtained as described above, the bubble fraction $B_{r1}$ can be obtained by the following equation (5).

$$B_{r1} = (C_{0\%} - C1) (C_{0\%} - C_{100\%}) \times 100 \qquad (5)$$

Since the fluid relative dielectric constant correction calculation circuit 21 has a calculation function of taking the atmospheric pressure Pa measured by the atmospheric pressure sensor 9c into a variable of the calculation function, a deviation of the relative dielectric constant of the fluid to be measured caused by a difference between the atmospheric pressure Pa serving as a reference for defining a database of calculation and the absolute fluid pressure P1 at the present time can be corrected.

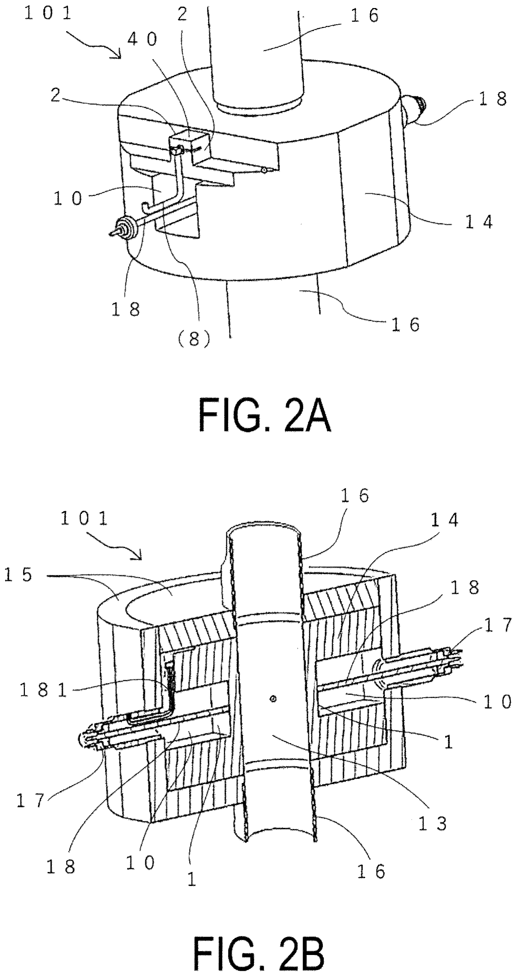

FIG. 2A illustrates a bubble fraction meter 101 according to an embodiment of the present disclosure, and FIG. 2B illustrates the bubble fraction meter 101 including a housing 15. As illustrated in FIGs. 2A and 2B, recessed portions 10, 10 are formed on the outer peripheral surface of the insulator 14. The recessed portions 10, 10 are opposed to each other with the flow path 13 in the central portion of the insulator 14 interposed therebetween. The pipes 16 are connected to both ends of the flow path 13. The pair of main electrodes 1, 1 are formed on the bottom surface of each recessed portion 10, 10. The main electrodes 1, 1 measure the electrostatic capacitance of the fluid to be measured in the flow path 13.

The coaxial cable 18 is connected to the main electrodes 1, 1. The coaxial cable 18 is led to the outside of the housing 15 through the connector 17.

As illustrated in FIG. 2A, a protruding portion 40 is formed in a part of the insulator 14, a pair of correction electrodes 2, 2 are provided on both side surfaces of the protruding portion 40 so as to face each other, and a coaxial cable 181 is connected to each of the correction electrodes 2 (see FIG. 2B). The correction electrodes 2, 2 measure the electrostatic capacitance of the insulator 14 by passing the electric flux line through the protruding portion 40.

In the example illustrated in FIG. 2A, the protruding portion 40 is formed on a step portion formed from one end surface of the insulator 14. The correction electrode 2 can be formed by, for example, a vacuum deposition method, a metallization method, an active metal method, or the like.

The processor 20 illustrated in FIG. 3 includes an electrostatic capacitance scale correction circuit 22 that corrects one or both of a deviation when the bubble fraction Br of the fluid to be measured is 0% and a deviation when the bubble fraction Br of the fluid to be measured is 100%, which are caused by the insulator 14, in the electrostatic capacitance value C1 measured by the main electrodes 1, 1.

An electrostatic capacitance value C2 measured by the correction electrodes 2, 2 is used to correct the electrostatic capacitance value C1 measured by the main electrodes 1, 1. That is, as illustrated in FIG. 3, the electrostatic capacitance value measured by the correction electrodes 2, 2 (hereinafter referred to as an insulator electrostatic capacitance value C2) is sent to the processor 20 together with the electrostatic capacitance value measured by the main electrodes 1, 1 (hereinafter referred to as an electrostatic capacitance measurement value C1), and the electrostatic capacitance scale correction circuit 22 calculates and outputs the bubble fraction corrected for the influence of the insulator 14.

Here, the electrostatic capacitance measurement value C1 is a measurement value obtained by observing a combination of the electrostatic capacitance of the fluid to be measured and the electrostatic capacitance of the insulator 14.

The output bubble fraction is displayed on a display device or recorded in a recording medium.

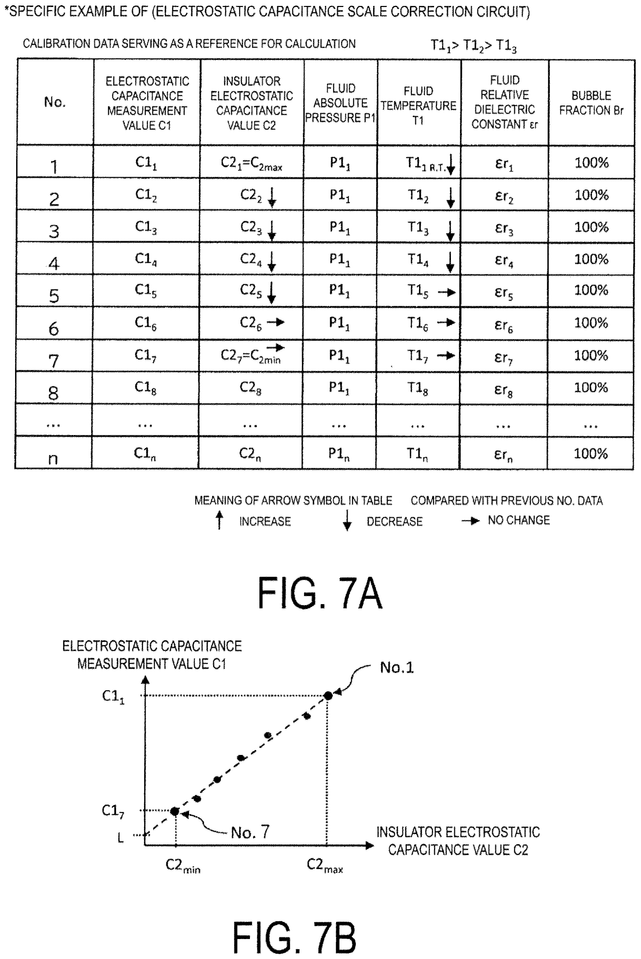

The function of the electrostatic capacitance scale correction circuit 22 will be described in detail with reference to FIGs. 7A and 7B.

First, as illustrated in FIG. 7A, the fluid to be measured is allowed to flow through the flow path 13 in a gaseous state (the bubble fraction Br is 100%), and data (electrostatic capacitance measurement value C1, insulator electrostatic capacitance value C2, absolute fluid pressure P1, fluid temperature T1, and fluid relative dielectric constant $\varepsilon$r) of a region (region Nos. 1 to 4, for example) where the insulator electrostatic capacitance value C2 of the correction electrodes 2 changes is obtained. After a while after the fluid temperature T1 becomes stable ($T1_6$, $T1_7$, $T1_8$, ...), the insulator electrostatic capacitance value C2 also becomes a stable value. Data (electrostatic capacitance measurement value C1, insulator electrostatic capacitance C2, absolute fluid pressure P1, fluid temperature T1, and fluid relative dielectric constant $\varepsilon$r) of a region (region Nos. 6 to 7, for example) where the insulator electrostatic capacitance value C2 is stable is obtained.

As illustrated in FIG. 7B, measurement values C2 of the insulator electrostatic capacitance value $C2_2$, C2s, $C2_4$, C2s, $C2_6$ sandwiched between the maximum value $C2_{max}$ and the minimum value $C2_{min}$ of the insulator electrostatic capacitance value C2 are plotted on the horizontal axis of the graph, and measurement values $C1_2$, $C1_3$, $C1_4$, $C1_5$, $C1_6$ of the electrostatic capacitance measurement value C1 when these measurement values are acquired are plotted on the vertical axis of the graph.

The approximation function indicating the gradual decrease of the electrostatic capacitance measurement value C1 is set as a linear approximation by using, for example, a graph tool provided in Excel (trade name, Microsoft Corporation), and then a correlative coefficient R is calculated. Next, the correlation coefficient R is tested at a significance level of 5% (two-sided probability) by using an r table (correlation coefficient test table). If significant, the following regression equation (6) is determined, which indicates a gradual decrease in the electrostatic capacitance measurement value C1. In the regression equation (6), K is a slope and L is an intercept.

$$C1 = K \times C2 + L \ (6)$$

By using the electrostatic capacitance measurement values $C_{0\%}$ and $C_{100\%}$ obtained by the equations (2) and (3), the slope (regression coefficient) K and the intercept L, and by using the following equations (7) and (8), electrostatic capacitance measurement values $C'_{0\%}$ and $C'_{100\%}$ of the fluid to be measured in which the influence of the insulator 14 is corrected can be obtained.

$$C'_{0\%} = K \times C_{0\%} + L \qquad (7)$$

$$C'_{100\%} = K \times C_{100\%} + L \quad (8)$$

($C'_{0\%}$: a corrected electrostatic capacitance measurement value of the fluid to be measured when the bubble fraction is 0%,
$C'_{100\%}$: a corrected electrostatic capacitance measurement value of the fluid to be measured when the bubble fraction is 100%)

Using the electrostatic capacitance measurement values $C'_{0\%}$ and $C'_{100\%}$ of the fluid to be measured, the bubble fraction $B_{r2}$ can be obtained by the following equation (9) using, for example, a bubble fraction calculation circuit.

$$B_{r2} = (C'_{0\%} - C1)\,(C'_{0\%} - C'_{100\%}) \times 100 \qquad (9)$$

The bubble fraction meters 100 and 101 can convert the obtained electrostatic capacitance measurement values $C1_2$, $C1_3$, $C1_4$, $C1_5$, $C1_6$, and $C1_7$ into the fluid density, and in this case, the calculation is performed based on the multivariable analysis provided in the electrostatic capacitance/fluid density circuit. The fluid density refers to the density of the fluid to be measured in a state containing air bubbles. The product of the converted fluid density, the cross-sectional area perpendicular to the axial direction of the flow path, and the flow velocity of the fluid to be measured flowing through the flow path is the mass flow rate of the fluid to be measured.

The electrostatic capacitance scale correction circuit 22 can also correct the relative dielectric constant of the insulator 14 based on the temperature of the insulator 14.

An AC voltage for measurement is preferably applied alternately to the main electrodes 1, 1 and the correction electrodes 2, 2 so as not to electrically interfere with each other. For the same reason, the opposing direction of the main electrodes 1, 1 and the opposing direction of the correction electrodes 2, 2 preferably cross each other. In this embodiment, the opposing directions are orthogonal to each other. This prevents the electric flux lines of the main electrodes 1, 1 passing through the fluid to be measured in the flow path 13 and the electric flux lines of the correction electrodes 2, 2 passing through the protruding portion 40 from affecting each other.

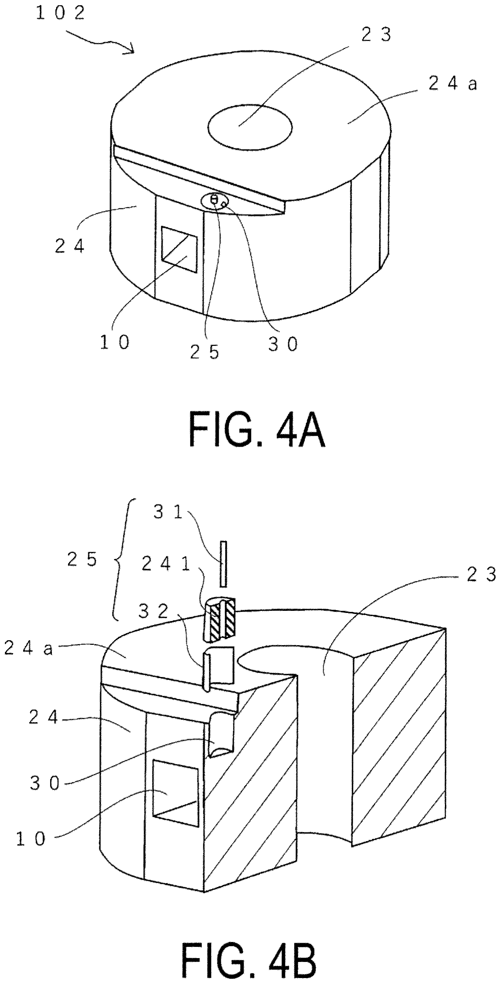

Next, another embodiment of the present disclosure will be described with reference to FIGs. 4A and 4B. The same components as those in FIGs. 2A, 2B, and 3 are denoted by the same symbols, and detailed description thereof will be omitted.

As illustrated in FIGs. 4A and 4B, a bubble fraction meter 102 according to this embodiment includes an insulator 24 having a flow path 23 along the axial direction. The recessed portions 10, 10 are formed to be opposed to each other with the flow path 23 interposed therebetween (only one recessed portion 10 is illustrated in the figure), and a pair of the main electrodes 1, 1 (see FIG. 2B) are formed on the bottom surfaces of the recessed portions 10, 10, respectively.

A hole portion 30 is formed in the insulator 24 substantially parallel to the axial direction of the flow path 23. The hole portion 30 is formed so as not to penetrate the flow path 23. The cylindrical correction electrode 25 is inserted into the hole portion 30. In the cylindrical correction electrodes 25, as illustrated in FIG. 4B, an internal electrode 31 and an external electrode 32 are arranged on the inner peripheral surface and the outer peripheral surface of a cylindrical insulator 241, respectively.

The hole portion 30 is formed in the cutout portion of the insulator 24, but may be formed in an end surface 24a of the insulator 24.

The cylindrical insulator 241 can be made of the same or different insulating material as the insulator 24 which is the main body. The internal electrode 31 is a columnar body inserted into the hole of the cylindrical insulator 241, and is preferably a conductor such as copper. The external electrode 32 can be formed by forming a metallized layer on the outer peripheral surface of the cylindrical insulator 241 or attaching a metal film to the outer peripheral surface of the cylindrical insulator 241. A coaxial cable (not illustrated) is connected to the internal electrode 31 and the external electrode 32.

Also in this embodiment, since the internal electrode 31 and the external electrode 32 of the cylindrical correction electrode 25 are arranged so as to be opposed to each other at positions where they do not penetrate the flow path 23 of the insulator 24, the electrostatic capacitance value measured by the main electrodes 1, 1 can be corrected based on the electrostatic capacitance value measured by the cylindrical correction electrode 25.

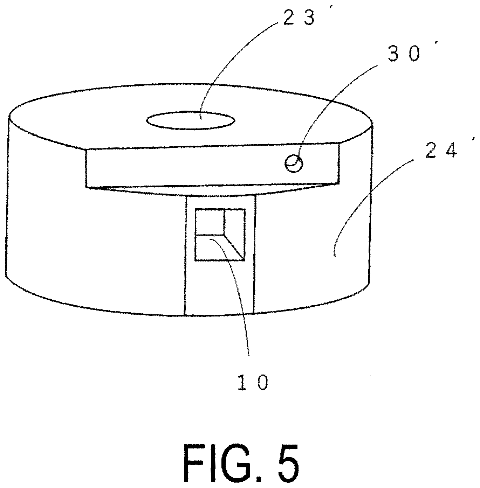

A bubble fraction meter according to still another embodiment of the present disclosure will be described with reference to FIG. 5. The same components as those in FIGs. 4A and 4B are denoted by the same symbols, and detailed description thereof will be omitted. FIG. 5 illustrates an insulator 24' in this embodiment.

As illustrated in FIG. 5, the insulator 24' has a flow path 23', and the recessed portions 10, 10 are formed at positions facing each other with the flow path 23'interposed therebetween (only one recessed portion 10 is illustrated in FIG. 5). The electrodes 1, 1 (see FIG. 2B) are formed on the bottom surfaces of the recessed portions 10, 10 and so as to face each other.

A hole portion 30' intersecting (orthogonal to) the axial direction of the flow path 23' is formed in the insulator 24'. The cylindrical correction electrode 25 is inserted into the hole portion 30'.

Other configurations are similar to the embodiments described above.

A shield plate (not illustrated) such as a metal plate may be provided between the main electrodes 1, 1 and the correction electrodes 2, 2, or between the main electrodes 1, 1 and the cylindrical correction electrodes 25, 25 in order to electrically insulate them from each other.

As described above in detail, according to the present disclosure, the temperature dependence of the electrostatic capacitance of the fluid to be measured due to the material of the insulator at the time of measure can be corrected. Furthermore, variations due to individual differences of insulators (for example, a difference generated for each firing lot) can be corrected, and measurement with high accuracy also can be performed.

Although the embodiments of the present disclosure have been described above, the bubble fraction meter of the present disclosure is not limited to the above-described embodiments, and various modifications and improvements can be made within the scope of the present disclosure.

REFERENCE SIGNS

1 Main electrode
2 Correction electrode
3, 13, 23 Flow path
4, 14, 24, 24' Insulator
24a End surface
5, 15 Housing
6, 16 Pipe
7, 17 Connector
8, 18, 181 Coaxial cable
9a Temperature sensor
9b Pressure sensor
9c Atmospheric pressure sensor
10 Recessed portion
20 Processor
21 Fluid relative dielectric constant correction calculation circuit
22 Electrostatic capacitance scale correction circuit
241 Cylindrical insulator
25 Cylindrical correction electrode
30, 30' Hole portion
31 Internal electrode
32 External electrode
100, 101 Bubble fraction meter

**Claims**

**1.** A bubble fraction meter for measuring a bubble fraction of a fluid to be measured, the bubble fraction meter comprising:

an insulator comprising a flow path through which the fluid to be measured flows;

a pair of main electrodes disposed at positions facing each other across the flow path in the insulator and configured to measure an electrostatic capacitance of the fluid to be measured in the flow path; and

a processor comprising a temperature sensor configured to measure a fluid temperature of the fluid to be measured in the flow path, a pressure sensor configured to measure a pressure of the fluid to be measured in the flow path, and an atmospheric pressure sensor configured to measure an atmospheric pressure, the processor comprising a fluid relative dielectric constant correction calculation circuit configured to calculate a corrected relative dielectric constant of the fluid to be measured based on the fluid temperature and an absolute fluid pressure which is a value obtained by adding a pressure of the fluid to be measured to the atmospheric pressure.

2. The bubble fraction meter according to claim 1, further comprising:

a pair of correction electrodes configured to measure an electrostatic capacitance of the insulator are provided in a region where an electric flux line generated between the pair of correction electrodes does not pass through the flow path.

3. The bubble fraction meter according to claim 2, wherein

an AC voltage for measurement is alternately applied to the pair of main electrodes and the pair of correction electrodes without affecting each other.

4. The bubble fraction meter according to claim 2 or 3, wherein

an opposing direction of the pair of main electrodes and an opposing direction of the pair of correction electrodes cross each other.

5. The bubble fraction meter according to claim 2 or 3, wherein

the correction electrodes are cylindrical correction electrodes comprising internal electrodes and external electrodes arranged on an inner peripheral surface and an outer peripheral surface of a cylindrical insulator, respectively, and are accommodated in a hole portion provided in the insulator.

6. The bubble fraction meter according to any one of claims 2 to 5, further comprising:

a shield plate is interposed between the main electrodes and the correction electrodes.

7. The bubble fraction meter according to any one of claims 1 to 6, wherein

the processor further comprises an electrostatic capacitance scale correction circuit configured to correct one or both of a deviation when the bubble fraction of the fluid to be measured is 0% and a deviation when the bubble fraction of the fluid to be measured is 100%, which are caused by the insulator in an electrostatic capacitance value measured by the main electrodes.

# FIG. 1

# FIG. 2A

# FIG. 2B

FIG. 3

EP 4 443 149 A1

102

23

24 a

24

10

25

30

# FIG. 4A

31

25

241

32

23

24 a

24

30

10

# FIG. 4B

23´

30´

24´

10

# FIG. 5

*1 SPECIFIC EXAMPLE OF (FLUID RELATIVE DIELECTRIC CONSTANT CORRECTION CALCULATION CIRCUIT) IN CASE OF HYDROGEN

EXAMPLE OF RELATIVE DIELECTRIC CONSTANT DATABASE OF HYDROGEN   ATMOSPHERIC PRESSURE Pa 1013.25 [hPa]

BOLD ITALICS INDICATE A LIQUID PHASE AND OTHERS INDICATE A GAS PHASE

| FLUID GAUGE PRESSURE Pg (MPa) / FLUID TEMPERATURE T1 (°C) | 0 | 0.2 | 0.4 | 0.6 | 0.8 | 1.0 |
|---|---|---|---|---|---|---|
| -256 | *1.243* | *1.244* | *1.244* | *1.245* | *1.246* | *1.247* |
| -255 | *1.239* | *1.240* | *1.241* | *1.242* | *1.242* | *1.243* |
| -254 | *1.236* | *1.237* | *1.237* | *1.238* | *1.239* | *1.240* |
| -253 | *1.232* | *1.233* | *1.233* | *1.234* | *1.235* | *1.236* |
| -252 | 1.004 | *1.228* | *1.229* | *1.230* | *1.231* | *1.232* |
| -251 | 1.004 | *1.224* | *1.225* | *1.226* | *1.227* | *1.228* |
| -250 | 1.003 | *1.219* | *1.220* | *1.222* | *1.223* | *1.224* |
| -249 | 1.003 | *1.214* | *1.215* | *1.217* | *1.218* | *1.219* |
| -248 | 1.003 | 1.011 | *1.210* | *1.211* | *1.213* | *1.214* |
| -247 | 1.003 | 1.010 | *1.204* | *1.205* | *1.207* | *1.209* |
| -246 | 1.003 | 1.010 | *1.197* | *1.199* | *1.201* | *1.203* |
| -245 | 1.003 | 1.009 | 1.017 | *1.191* | *1.194* | *1.196* |
| -244 | 1.003 | 1.009 | 1.016 | *1.182* | *1.186* | *1.189* |
| -243 | 1.003 | 1.008 | 1.015 | 1.024 | *1.175* | *1.179* |
| -242 | 1.003 | 1.008 | 1.014 | 1.022 | 1.035 | *1.167* |
| -241 | 1.002 | 1.008 | 1.014 | 1.021 | 1.031 | 1.049 |
| -240 | 1.002 | 1.007 | 1.013 | 1.020 | 1.028 | 1.040 |

# FIG. 6A

(i) CALIBRATION DATA SERVING AS A REFERENCE FOR CALCULATION

| No. | ELECTROSTATIC CAPACITANCE MEASUREMENT VALUE C1 | FLUID ABSOLUTE PRESSURE P1 | FLUID TEMPERATURE T1 | FLUID RELATIVE DIELECTRIC CONSTANT εr | BUBBLE FRACTION Br |
|---|---|---|---|---|---|
| 1 | $C1_1$ | $P1_1$ | $T1_1$ | $\varepsilon r_1$ | 0% |
| 2 | $C1_2$ | $P1_2$ | $T1_2$ | $\varepsilon r_2$ | 100% |
| 3 | $C1_3$ | $P1_3$ | $T1_3$ | $\varepsilon r_3$ | 0% |
| 4 | $C1_4$ | $P1_4$ | $T1_4$ | $\varepsilon r_4$ | 100% |
| 5 | $C1_5$ | $P1_5$ | $T1_5$ | $\varepsilon r_5$ | 0% |
| | ... | ... | ... | ... | ... |
| n | $C1_n$ | $P1_n$ | $T1_n$ | $\varepsilon r_n$ | 0 or100% |

# FIG. 6B

(ii) VARIANCE COVARIANCE OF (i)

| VARIANCE COVARIANCE | C1 | P1 | T1 | εr | Br |
|---|---|---|---|---|---|
| C1 | a11 | a21 | a31 | a41 | a51 |
| P1 | a21 | a22 | a32 | a42 | a52 |
| T1 | a31 | a32 | a33 | a43 | a53 |
| εr | a41 | a42 | a43 | a44 | a54 |
| Br | a51 | a52 | a53 | a54 | a55 |

# FIG. 6C

(iii) INVERSE MATRIX OF P1, T1, εr, Br OF (ii)

| INVERSE MATRIX | P1 | T1 | εr | Br |
|---|---|---|---|---|
| P1 | b22 | b32 | b42 | b52 |
| T1 | b32 | b33 | b43 | b53 |
| εr | b42 | b43 | b44 | b54 |
| Br | b52 | b53 | b54 | b55 |

# FIG. 6D

\*SPECIFIC EXAMPLE OF (ELECTROSTATIC CAPACITANCE SCALE CORRECTION CIRCUIT)

CALIBRATION DATA SERVING AS A REFERENCE FOR CALCULATION     $T1_1 > T1_2 > T1_3$

| No. | ELECTROSTATIC CAPACITANCE MEASUREMENT VALUE C1 | INSULATOR ELECTROSTATIC CAPACITANCE VALUE C2 | FLUID ABSOLUTE PRESSURE P1 | FLUID TEMPERATURE T1 | FLUID RELATIVE DIELECTRIC CONSTANT εr | BUBBLE FRACTION Br |
|---|---|---|---|---|---|---|
| 1 | $C1_1$ | $C2_1 = C2_{max}$ | $P1_1$ | $T1_{1\ R.T.}$ ↓ | $εr_1$ | 100% |
| 2 | $C1_2$ | $C2_2$ ↓ | $P1_1$ | $T1_2$ ↓ | $εr_2$ | 100% |
| 3 | $C1_3$ | $C2_3$ ↓ | $P1_1$ | $T1_3$ ↓ | $εr_3$ | 100% |
| 4 | $C1_4$ | $C2_4$ ↓ | $P1_1$ | $T1_4$ ↓ | $εr_4$ | 100% |
| 5 | $C1_5$ | $C2_5$ ↓ | $P1_1$ | $T1_5$ → | $εr_5$ | 100% |
| 6 | $C1_6$ | $C2_6$ → | $P1_1$ | $T1_6$ → | $εr_6$ | 100% |
| 7 | $C1_7$ | $C2_7 = C2_{min}$ → | $P1_1$ | $T1_7$ → | $εr_7$ | 100% |
| 8 | $C1_8$ | $C2_8$ | $P1_1$ | $T1_8$ | $εr_8$ | 100% |
| ... | ... | ... | ... | ... | ... | ... |
| n | $C1_n$ | $C2_n$ | $P1_n$ | $T1_n$ | $εr_n$ | 100% |

MEANING OF ARROW SYMBOL IN TABLE     COMPARED WITH PREVIOUS NO. DATA

↑  INCREASE     ↓  DECREASE     → NO CHANGE

# FIG. 7A

ELECTROSTATIC CAPACITANCE
MEASUREMENT VALUE C1

# FIG. 7B

FIG. 8

## INTERNATIONAL SEARCH REPORT

| International application No. |
|---|
| **PCT/JP2022/043734** |

**A. CLASSIFICATION OF SUBJECT MATTER**

***G01N 27/22*** (2006.01)i
FI: G01N27/22 B

According to International Patent Classification (IPC) or to both national classification and IPC

**B. FIELDS SEARCHED**

Minimum documentation searched (classification system followed by classification symbols)

G01F1/56-G01F1/90, G01N27/00-G01N27/10, G01N27/14-G01N27/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-249673 A (JAPAN NATIONAL OIL CORP) 14 September 2000 (2000-09-14) paragraphs [0003]-[0011], fig. 1-4 | 1 |
| A | | 2-7 |
| Y | JP 60-210753 A (NIPPON GENSHIRYOKU KENKYUSHO) 23 October 1985 (1985-10-23) p. 2, fig. 1-3 | 1 |
| A | | 2-7 |
| A | JP 10-281843 A (JAPAN NATIONAL OIL CORP) 23 October 1998 (1998-10-23) | 1-7 |
| A | JP 2014-232007 A (JAPAN AEROSPACE EXPLORATION) 11 December 2014 (2014-12-11) | 1-7 |
| A | JP 7-27734 A (TATSUNO MEKATORONIKUSU KK) 31 January 1995 (1995-01-31) | 1-7 |
| A | JP 2019-528445 A (ECOLAB USA INC) 10 October 2019 (2019-10-10) | 1-7 |
| A | US 2015/0160147 A1 (UNIVERSITEIT GENT) 11 June 2015 (2015-06-11) | 1-7 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 December 2022** | **10 January 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

<div align="center">

**INTERNATIONAL SEARCH REPORT**

</div>

| | International application No. |
|---|---|
| | **PCT/JP2022/043734** |

**C.      DOCUMENTS CONSIDERED TO BE RELEVANT**

| Category* | Citation of document, with indication, where appropriate, of the relevant passages | Relevant to claim No. |
|---|---|---|
| A | US 5017879 A (SCHLUMBERGER TECHNOLOGY CORPORATION) 21 May 1991 (1991-05-21) | 1-7 |
| A | CN 103884747 A (CHINA UNIVERSITY OF PETROLEUM (EAST CHINA)) 25 June 2014 (2014-06-25) | 1-7 |
| P, A | WO 2022/163779 A1 (KYOCERA CORP) 04 August 2022 (2022-08-04) | 1-7 |
| P, A | WO 2022/124377 A1 (KYOCERA CORP) 16 June 2022 (2022-06-16) | 1-7 |

Form PCT/ISA/210 (second sheet) (January 2015)

## INTERNATIONAL SEARCH REPORT
### Information on patent family members

| International application No. |
| --- |
| **PCT/JP2022/043734** |

| Patent document cited in search report | | | Publication date (day/month/year) | Patent family member(s) | | | Publication date (day/month/year) |
| --- | --- | --- | --- | --- | --- | --- | --- |
| JP | 2000-249673 | A | 14 September 2000 | (Family: none) | | | |
| JP | 60-210753 | A | 23 October 1985 | (Family: none) | | | |
| JP | 10-281843 | A | 23 October 1998 | (Family: none) | | | |
| JP | 2014-232007 | A | 11 December 2014 | (Family: none) | | | |
| JP | 7-27734 | A | 31 January 1995 | (Family: none) | | | |
| JP | 2019-528445 | A | 10 October 2019 | US WO CN | 2018/0052133 2018/035358 109564179 | A1 A1 A | |
| US | 2015/0160147 | A1 | 11 June 2015 | WO EP | 2013/178813 3654025 | A1 A1 | |
| US | 5017879 | A | 21 May 1991 | EP | 308004 | A2 | |
| CN | 103884747 | A | 25 June 2014 | (Family: none) | | | |
| WO | 2022/163779 | A1 | 04 August 2022 | (Family: none) | | | |
| WO | 2022/124377 | A1 | 16 June 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NORIHIDE MAENO et al.** Void Fraction Measurement of Cryogenic Two Phase Flow Using a Capacitance Sensor. *Trans. JSASS Aerospace Tech. Japan,* 2014, vol. 12 (29